# EUROPEAN PATENT APPLICATION

(11) **EP 1 580 150 A1**
(43) Date of publication of application: **28.09.2005**
(21) Application number: 05005855.1
(22) Date of filing: 17.03.2005
(51) Int. Cl.: B65G 49/06, C03B 33/03

(54) **Apparatus for loading and unloading plate-like elements for machines for processing materials in plate form**

(30) Priority: 26.03.2004 IT MI20040597
(71) Applicant: Z. BAVELLONI S.p.A., I-22070 Bregnano (Como) (IT)
(72) Inventor: Bavelloni, Franco, 22020 San Fermo della Battaglia (Como) (IT)
(74) Representative: Modiano, Guido

(57) **Abstract**

An apparatus for loading and unloading plate-like elements for machines for processing materials in plate form, comprising, on one side of a machine (1) for processing materials in plate form, a station (2) for loading the plate (L) to be processed and, on the other side of the machine, a station (6) for unloading the processed plate, at least one pick-up arm (15) provided on the supporting beam (10) of the working head (11) of the machine, which can perform a translational motion with respect to the beam (10), and is adapted to cause simultaneously the translational motion of a plate to be processed from the loading station (2) to the working surface (3) of the machine and the translational motion of a processed sheet (L) from the working surface (3) to an unloading station (6).

## Description

The present invention relates to an apparatus for loading and unloading plate-like elements for machines for processing materials in plate form.

As is known, automatic machines, and particularly numeric-control machines used to process glass sheets, marble slabs and the like, currently use robots of the anthropomorphic type or loaders with a Cartesian movement for loading and unloading the materials being processed.

In principle, these solutions work well, but in practice they can be used only in the case of large production runs, in which it is possible to recover the investment made within a reasonable amount of time.

In the case of relatively small production runs, in numeric terms these solutions are not advantageous and accordingly at present there are either fully-automated solutions or solutions that require a considerable use of labor.

The aim of the invention is to solve the problem described above by providing an apparatus for loading and unloading plate-like elements for machines for processing materials in plate form that can be connected directly to the machine that performs the process with a very practical and quick preparation, so as to make said apparatus advantageous even in case of small production runs.

Within this aim, an object of the invention is to provide a loading and unloading apparatus in which it is possible to utilize a part of the machine proper to perform the loading and unloading operations, thus contributing to a further containment of the costs of the machine.

Another object of the present invention is to provide an apparatus that thanks to its particular constructive characteristics is capable of giving the greatest assurances of reliability and safety in use.

Another object of the present invention is to provide an apparatus that can be easily obtained starting from commonly commercially available elements and materials and is further competitive from a merely economical standpoint.

This aim and these and other objects that will become better apparent hereinafter are achieved by an apparatus for loading and unloading plate-like elements for machines for processing materials in plate form, according to the invention, characterized in that it comprises, on one side of a machine for processing materials in plate form, a station for loading the plate to be processed and, on the other side of said machine, a station for unloading the processed plate, at least one pick-up arm being further provided on the supporting beam of the working head of said machine, said arm being able to perform a translational motion with respect to said beam and to cause simultaneously the translational motion of a plate to be processed from said loading station to the working surface of said machine and the translational motion of a processed plate from said working surface to said unloading station.

Further characteristics and advantages of the present invention will become better apparent from the description of a preferred but not exclusive embodiment of an apparatus for loading and unloading plate-like elements for machines for processing materials in plate form, illustrated by way of non-limiting example in the accompanying drawings, wherein:

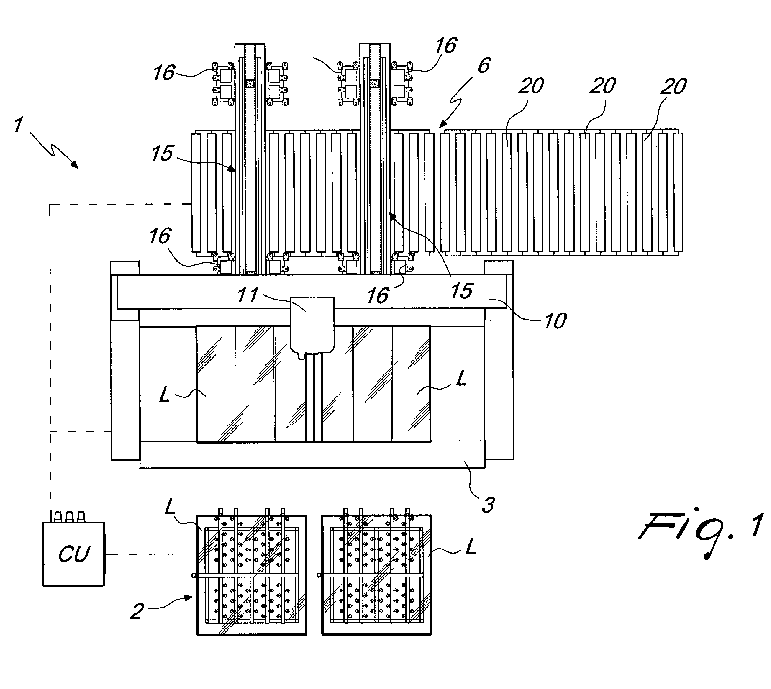

Figure 1 is a schematic plan view of the loading and unloading apparatus according to the invention at the end of the operational phase;
Figure 2 is a plan view of the initial step of loading and unloading the processed plates;

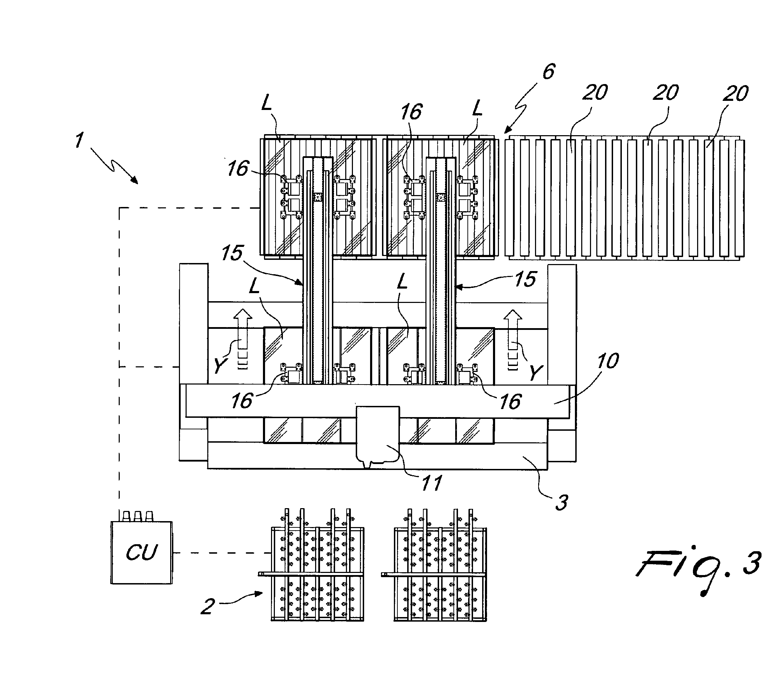

Figure 3 is a plan view of the final moment of the step of loading and unloading the plates;

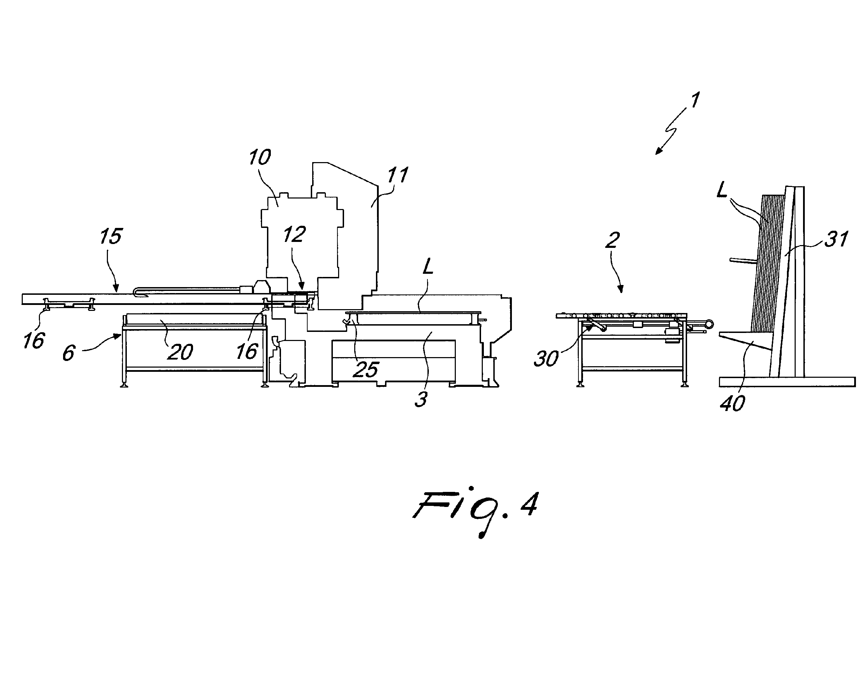

Figure 4 is an elevation view of the machine at the beginning of the step of processing the plate;

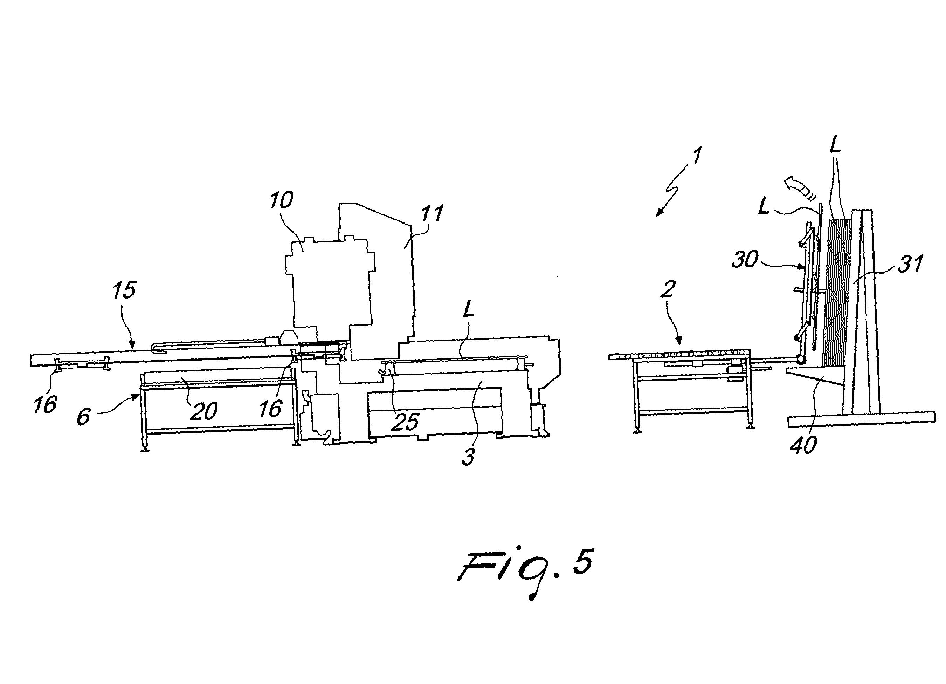

Figure 5 is a schematic view of the removal of a plate from the rack in order to position it in the loading station;

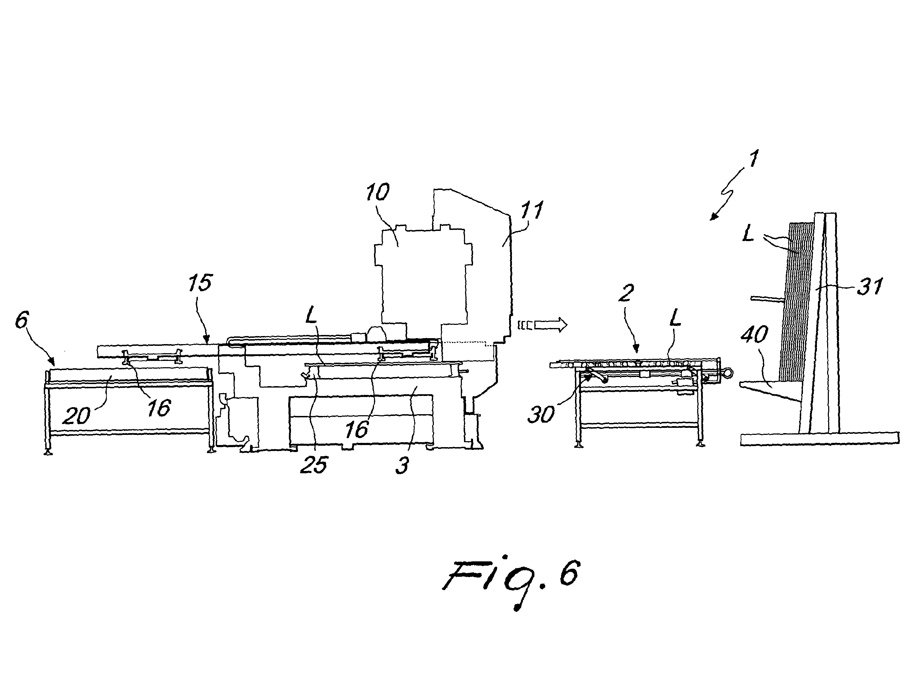

Figure 6 is an elevation view of the initial moment of the loading and unloading step;

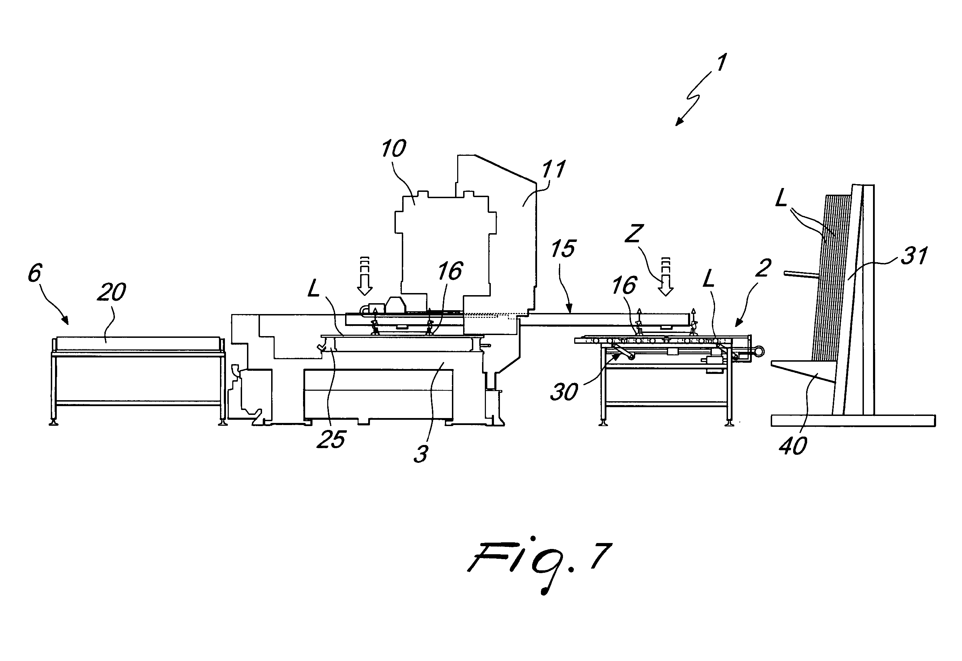

Figure 7 is an elevation view of the moment in which the arm engages the plates to be moved;

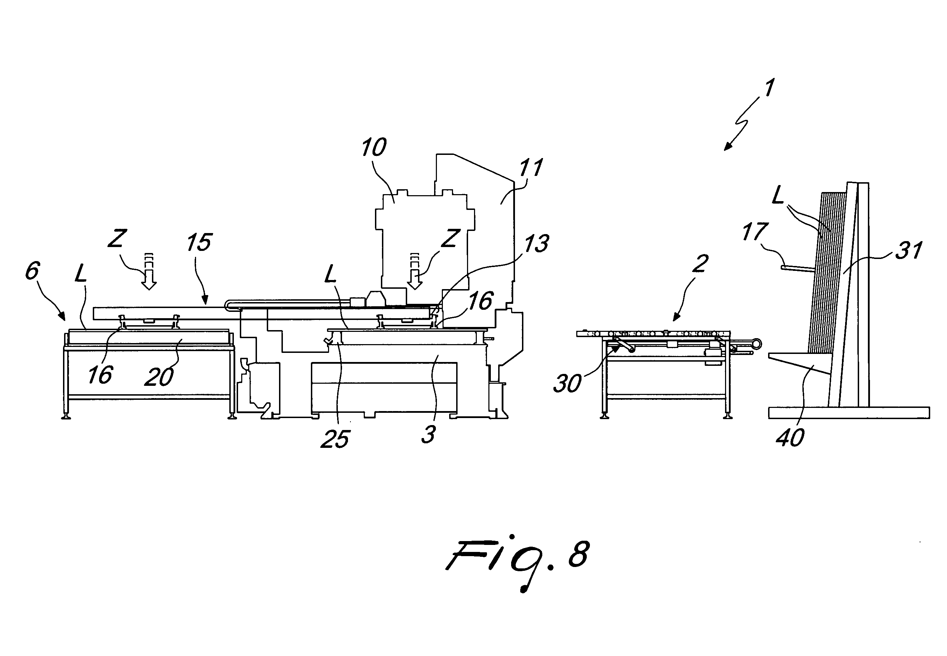

Figure 8 is a view of the final moment of the loading and unloading step;

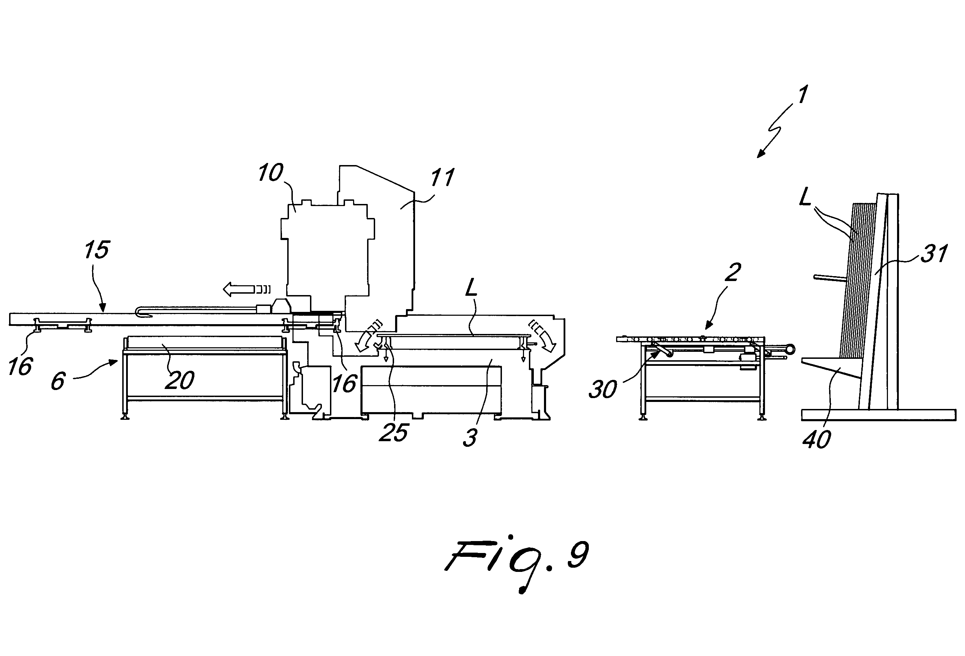

Figure 9 is an elevation view of the initial moment of the step of processing the plate;
Figure 10 is a view of the initial step of preparing the machine;
Figure 11 is a view of the step of positioning the plate in the loading station according to the arrangement of the plate on the machine;

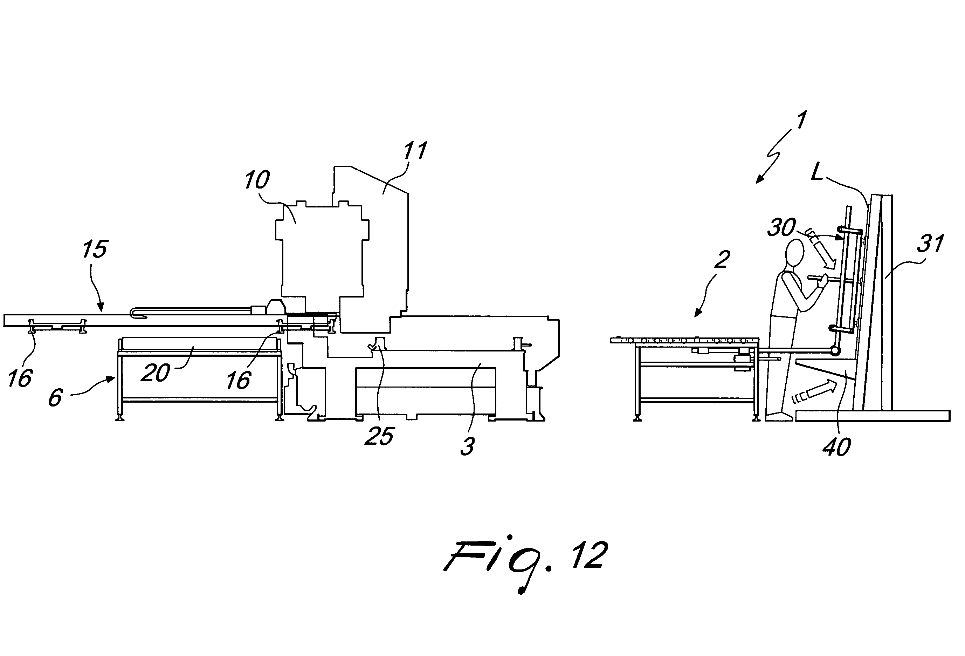

Figure 12 is a schematic view of the step of automatically positioning the rack according to the arrangement of the plate in the loading station;
Figure 13 is an elevation view of the initial moment of the step of loading and unloading the plate, with the cleaning of the surface of the processed plate;
Figures 14 and 15 are views of the detail of the steps for cleaning the surface of the plate.

With reference to the figures, the apparatus for loading and unloading plate-like elements for machines for processing materials in plate form, according to the invention, comprises, at an automatic machine, for example of the numeric control type, for processing material in plate form, generally designated by the reference numeral 1, a loading station 2.

Advantageously, in order to increase the operating potential of the machine, it is preferable to arrange two loading stations side by side, allowing to perform on the machine the processing on two plates deposited on the working surface 3 of said machine 1.

Symmetrically to the loading station relative to the machine 1 there is a station for unloading the processed plate or plates, which is generally designated by the reference numeral 6.

The particular characteristic of the invention consists in that on the beam 10 that supports the working head 11 of the machine there is at least one pick-up arm 15; in the specific example, since two plates are positioned simultaneously on the working surface, two pick-up arms 15 are provided which are designed to perform simultaneously the translational motion of a plate to be processed, designated by the reference letter L, from the loading station to the working surface and from the working surface to the unloading station.

For this purpose, each arm 15, which is guided so that it can slide in guides 12 formed below the beam 10 that form arm sliding means, has at both ends sucker-fitted pick-up elements 16, which are connected to translation means 13 for translational motion along the vertical axis, which is designated by the reference letter Z, in order to perform movement toward and away from the working surface.

The beam 10 can move along a direction that is designated by the reference letter Y, and the working head 11 can move on the beam 10 in a direction that is designated by the reference letter X.

The three directions X, Y, and Z are typically substantially perpendicular to each other.

With the described arrangement, it is therefore possible to perform in an automatic succession, by way of particularly simple means, the loading and unloading of the plates by utilizing the movement of the beam in this motion.

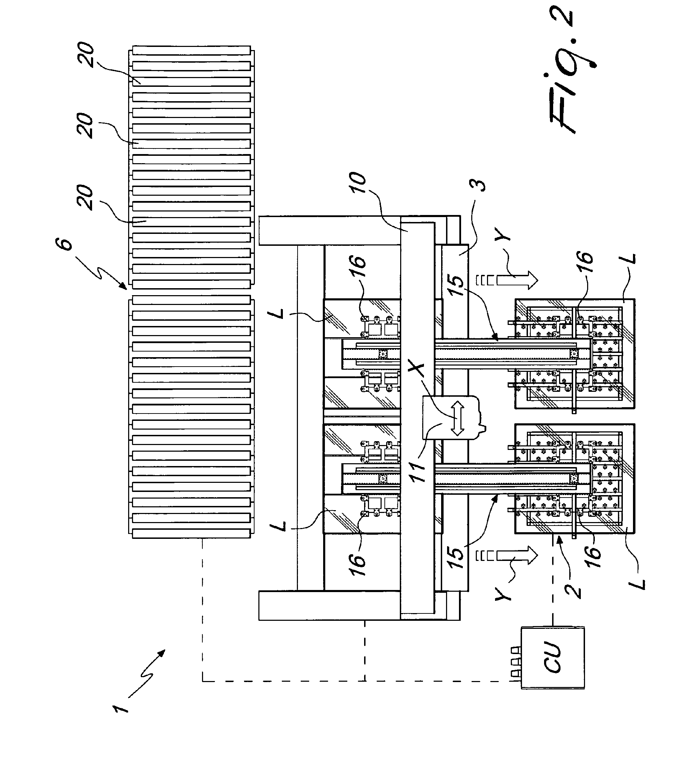

In practical execution, in the initial pick-up position, shown in Figure 2, the beam 10 is moved along the axis Y on the side of the loading station and the arms 15 are extracted so as to position themselves correspondingly on the plates L arranged in the loading station and on the plates being processed.

The translational motion of the arms, together with the at least partial translational motion of the beam, allows to simultaneously transfer the plate L from the loading station 2 to the working surface 3 and the plates L from the working surface 3 to the unloading station 6, which is advantageously constituted by a roller conveyor 20, which conveys the processed plates to the subsequent stations, such as for example washing stations.

It is also possible to provide, at the loading station, an automatic unit 30 for picking the plates L up from a rack 31, which in a per se known manner is arranged side by side with respect to the loading station.

Once the positioning of the plate on the working surface has been performed, the head performs the programmed processes and the preceding cycle is repeated in full.

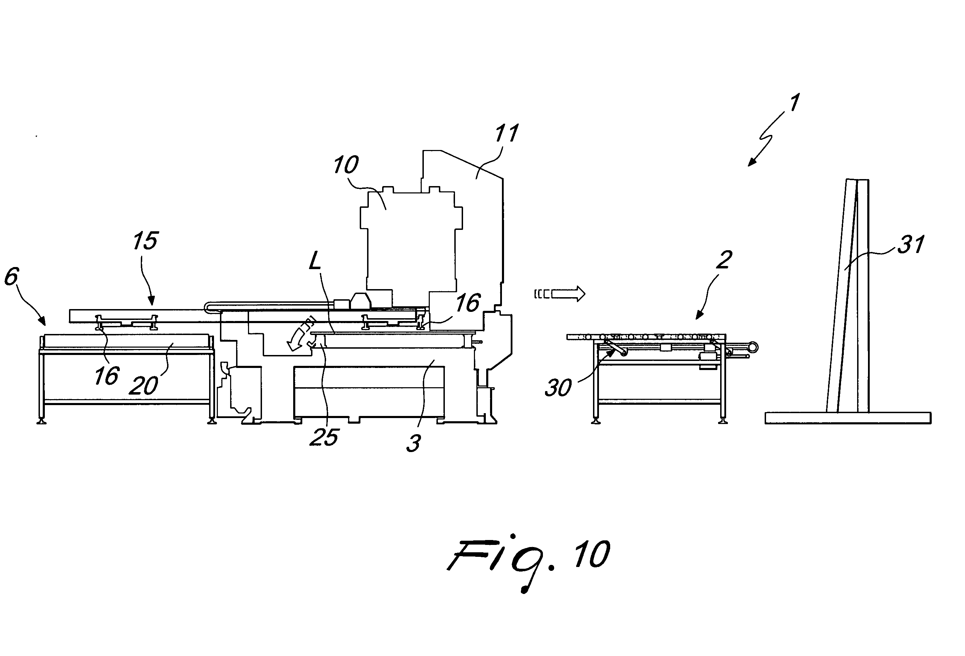

It should also be noted that the machine allows to position automatically the plates depending on the position that said plates must have on the working surface, and therefore as a preliminary step, as shown in Figure 10, the operator positions the plate L on the working surface, arranging the suckers 25 with the corresponding abutments, so as to provide three classic positioning points.

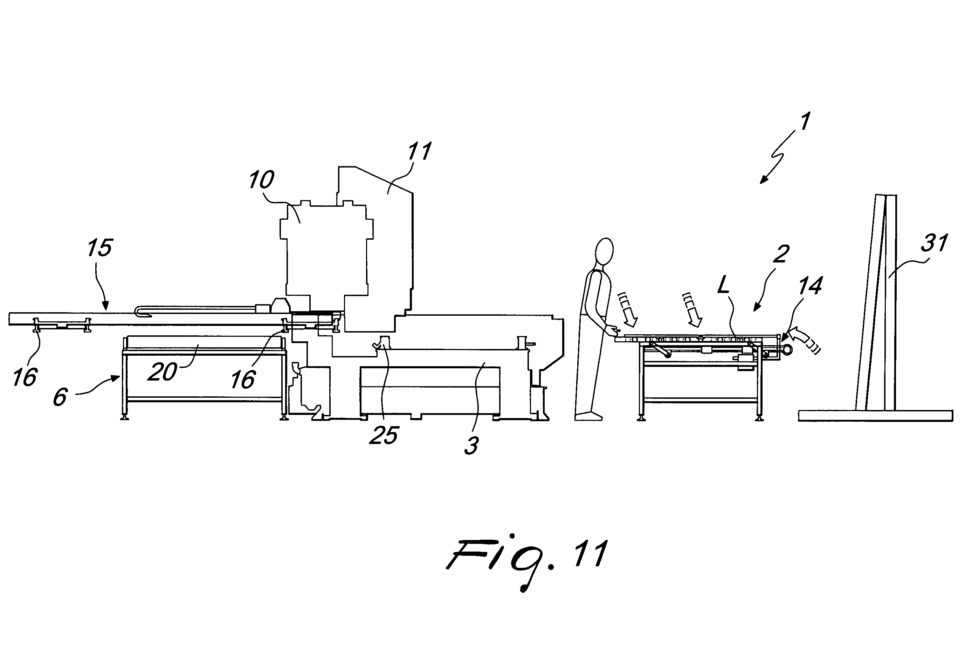

Once the plate has been positioned, as shown in Figure 10, the abutments are lowered and said plate is picked up by the pick-up element or unit 16 of the arm 15 and transferred, as shown in Figure 11, onto the surface of the loading station 2, where the operator correspondingly positions the abutments 14 of the loading station 2 so that the plate is positioned, for being picked up in a manner that allows it to always turn up in the same position on the working surface.

If the automatic pick-up unit 30 is provided, it moves the plate, during the step of machine setup, from the loading station to the rack, positioning the ledges 40 and any lateral abutments 17 of the rack so that the plate is positioned so as to match the positions that it has to assume subsequently.

Once the initial preparation of the machine has been performed, the machine is ready to perform the processing cycle automatically under control of a control unit CU, and the operator merely has to replace periodically the empty rack with a rack provided with plates.

The apparatus can also be provided optionally with automatic means for cleaning the processed plate.

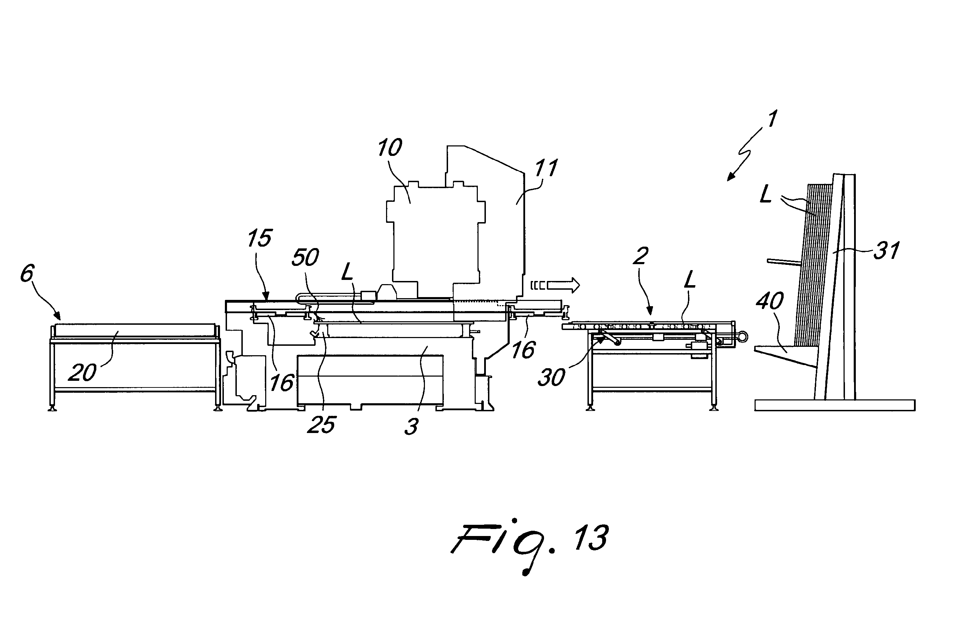

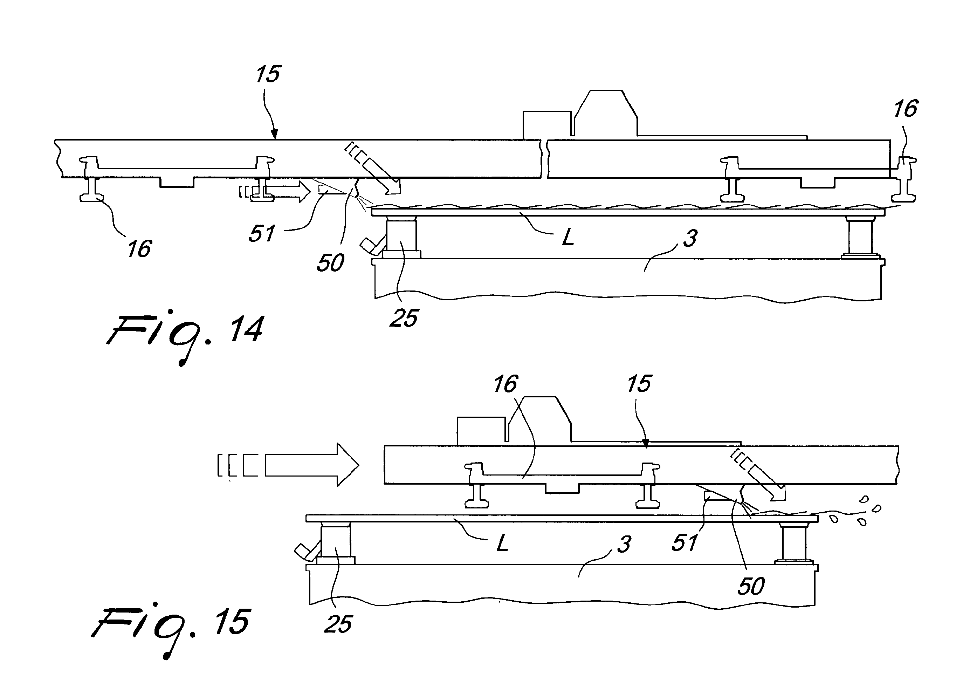

The cleaning means, as shown in Figures 13 to 15, provide a blower 50, which is provided directly on the pick-up arm 15 in the region provided between the two sucker-fitted pick-up elements or units 16; preferably, the blower 50 is arranged proximate to the sucker-fitted pick-up unit directed toward the unloading station.

The blower 50 is connected to an inlet 51 for introducing compressed air, which is capable of generating a curtain or stream of air that strikes the surface of the processed plate, removing impurities and processing water, so that the plate that is sent toward the unloading station is perfectly clean.

The blower, as shown in Figures 13 to 15, is actuated during the step of translational motion of the pick-up arm 15 when the two sucker-fitted pick-up elements 16 respectively engage the plate arranged in the loading station and the plate arranged in the processing station, which is to be transferred to the unloading station.

With the device described above, it is therefore possible to perform optimum cleaning of the surface of the plate without thereby increasing the processing times and without having to introduce particular constructive complications in the machine.

From what has been described above, it is therefore evident that the invention achieves the intended aim and objects, and in particular the fact is stressed that it is possible to achieve automatic positioning with loading and unloading of the plates by utilizing extremely simple operating means, which are based on providing the pick-up arms directly on the beam.

In the specific example, two separate arms have been positioned, since the machine is preset to process two separate plates. Obviously, nothing changes conceptually if the machine is preset for processing a single plate.

In the specific case of two plates, during the step of moving the plates, the head is arranged in a central position on the axis X between the two arms, so as to not interfere with said arms.

Moreover, the arms, during the normal steps of operation, are arranged in an extracted position toward the unloading station, so that they do not interfere in any way with the active step of the working head.

The beam 10, as mentioned previously, during the initial pick-up steps is arranged on the axis Y so that it is on the side of the loading station, thus increasing considerably the speed and ease of all the operations for moving the plate.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Application No. MI2004A000597 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for loading and unloading plate-like elements for machines for processing materials in plate form, **characterized in that** it comprises, on one side of a machine (1) for processing materials in plate form (L), a station (2) for loading the plate (L) to be processed and, on the other side of said machine (1), a station (6) for unloading the processed plate (L), at least one pick-up arm (15) being further provided on the supporting beam (10) of the working head (11) of said machine (1), said arm (15) being able to perform a translational motion with respect to said beam (10) and to produce simultaneously the translational motion of a plate (L) to be processed from said loading station (2) to the working surface (3) of said machine (1) and the translational motion of a processed plate (L) from said working surface (3) to said unloading station (6).

2. The apparatus according to claim 1, **characterized in that** it comprises two loading stations (2) arranged side by side for transferring onto the working surface (3) of said machine two plates (L) arranged side by side.

3. The apparatus according to the preceding claims, **characterized in that** said loading station (2) is arranged symmetrically with respect to said unloading station (6) relative to said machine (1).

4. The apparatus according to one or more of the preceding claims, **characterized in that** it comprises two pick-up arms (15), which are supported by said beam (10) and are arranged mutually side by side.

5. The apparatus according to one or more of the preceding claims, **characterized in that** it comprises, on said beam (10), means (12) for the sliding of each one of said arms (15) along a direction that is substantially perpendicular to the direction of the translational motion of said head (11) on said beam (10).

6. The apparatus according to one or more of the preceding claims, **characterized in that** it comprises, at the ends of each one of said arms (15), sucker-fitted pick-up units (16) for picking up said plates (L).

7. The apparatus according to one or more of the preceding claims, **characterized in that** each one of said arms (15) is connected to said beam (10) with the interposition of means (13) for translational motion about a vertical axis that is substantially perpendicular to the direction of motion of said beam (10) and to the direction of motion of said head (11).

8. The apparatus according to one or more of the preceding claims, **characterized in that** said head (11) is arranged in a central portion of said beam (10) when said arms (15) are actuated.

9. The apparatus according to one or more of the preceding claims, **characterized in that** said beam (10), in the initial step of the transfer of said plate (L) from said loading station (2) to said machine (1) and of the processed plate (L) from the working surface (3) to said unloading station (6), is arranged at the end of its stroke toward said loading station (2).

10. The apparatus according to one or more of the preceding claims, **characterized in that** said beam (10), during the step of translational motion of said plates (L), is adapted to perform a translational motion with respect to the working surface (3).

11. The apparatus according to one or more of the preceding claims, **characterized in that** it comprises an automatic pick-up unit (30), which acts in said loading station (2) and can engage plates (L) placed on a rack (31) that can be arranged adjacent to said loading station (2).

12. The apparatus according to one or more of the preceding claims, **characterized in that** it can be set up according to the position of the plate (L) being processed on the working surface (3) by setting retention abutments (14) on the loading surface (2) and by positioning the ledge (40) of the rack (31) for the corresponding positioning of the plates (L) to be processed on said rack (31).

13. The apparatus according to one or more of the preceding claims, **characterized in that** it comprises, on said at least one pick-up arm (15), means for cleaning (50) the surface of the processed plate (L).

14. The apparatus according to claim 13, **characterized in that** said cleaning means are constituted by a blower.

15. The apparatus according to claim 14, **characterized in that** said blower (50) is positioned between said sucker-fitted pick-up units (16).

16. The apparatus according to one or more of claims 14 and 15, **characterized in that** said blower (50) is adapted to act during the step of transfer of said pick-up arm (15) in order to move said sucker-fitted pick-up units (16) respectively into engagement with the processed plate (L) and with a plate arranged on said loading station (2).
